# EUROPÄISCHE PATENTSCHRIFT

(11) **EP 0 935 421 B1**
(45) Veröffentlichungstag und Bekanntmachung des Hinweises auf die Patenterteilung: **13.06.2001**
(21) Anmeldenummer: 97945827.0
(22) Anmeldetag: 14.10.1997
(51) Int. Cl.: A22C 11/12

(54) **VERFAHREN UND VERSCHLIESSVORRICHTUNG ZUM HERSTELLEN WURSTARTIGER PRODUKTE**
METHOD AND CLOSING DEVICE FOR PRODUCING SAUSAGE-TYPE PRODUCTS
PROCEDE ET DISPOSITIF DE FERMETURE POUR FABRIQUER DES PRODUITS DU TYPE SAUCISSE

(30) Priorität: 31.10.1996 DE 19644074
(43) Veröffentlichungstag der Anmeldung: 18.08.1999
(73) Patentinhaber: Poly-clip System GmbH & Co. KG, 60489 Frankfurt am Main (DE)
(72) Erfinder: HANTEN, Jürgen, D-35519 Rockenberg (DE); VERMEHREN, Günter, D-61250 Usingen (DE)
(74) Vertreter: Fischer, Ernst, Dr.
(86) Internationale Anmeldenummer: EP9705647
(87) Internationale Veröffentlichungsnummer: WO9818334

(56) Entgegenhaltungen:
- EP-A- 0 000 821
- DE-A- 2 730 603
- DE-A- 19 601 720
- GB-A- 2 109 219
- US-A- 4 709 450
- US-A- 5 405 288

## Beschreibung

Die Erfindung bezieht sich auf ein Verfahren zum Herstellen von wurstartigen Produkten mit einer schlauch- oder beutelartigen Verpackungshülle, bei dem die (einseitig verschlossene) Verpackungshülle zunächst mit Füllgut gefüllt und anschließend eingeschnürt, daraufhin ein füllgutfreier Zopfabschnitt gewünschter Länge hergestellt und der füllgutfreie Zopfabschnitt schließlich durch Setzen und Schließen mindestens einer Verschlußklammer verschlossen wird. Die Erfindung bezieht sich außerdem auf eine Verschließvorrichtung zum Herstellen von wurstartigen Produkten mit einer schlauch- oder beutelartigen Verpackungshülle mit Mitteln zum Einschnüren der Verpackungshülle, Mitteln zum Herstellen eines füllgutfreien Zopfabschnitts durch Spreizen der Einschnürmittel und Mitteln zum Setzen und Schließen von Verschlußklammern.

Es ist bekannt, beispielsweise Wurstbrät für Speisewürste oder Kitt- und Dichtmassen in Folienschläuchen oder Beuteln zu verpacken. Dies geschieht in bekannter Weise (DE-OS 27 30 603) dadurch, daß die schlauch- oder beutelartige Verpackungshülle von einer Füllmaschine mit Füllgut befüllt wird. Die Füllmaschine gibt am Ende des Füllvorganges oder kurz davor einen Impuls aus, mit dem ein Verschließvorgang ausgelöst wird. Dieser beginnt damit, daß die gefüllte Verpackungshülle zunächst durch Schließen zweier Verdrängerscherenpaare zu einem kurzen Zopf eingeschnürt wird. Anschließend werden die beiden Verdrängerscherenpaare axial in Wurstlängsrichtung auseinanderbewegt (gespreizt) (und verdrängen dort etwa befindliches Füllgut), so daß zwischen den beiden Verdrängerscherenpaaren ein füllgutfreier Zopf gewünschter Länge entsteht. Daraufhin schwenkt ein unterer Cliphebel mit einer Matrize, in der sich zwei offene Verschlußklammern befinden, unter den füllgutfreien Zopfabschnitt, während gleichzeitig ein oberer Cliphebel mit einem Stempel von oben gegen die Verschlußklammern schwenkt und diese verschließt. Der Zopf ist dann von zwei nebeneinander angeordneten Verschlußklammern verschlossen und kann ggf. zwischen diesen beiden Verschlußklammern durchtrennt werden. Nach dem Verschließvorgang bewegen sich die daran beteiligten Maschinenteile wieder in ihre Ausgangslage zurück und ein neuer Arbeitszyklus beginnt mit dem Füllvorgang.

Die Verdrängerscherenpaare und der Cliphebel sind mechanisch, z.B. durch Wellen, Kurvenscheiben oder dergleichen miteinander gekoppelt, so daß ihre Bewegungen während des Verschlußvorgangs zwangskoordiniert sind.

Ausgehend von diesem Stand der Technik ist es die der Erfindung zugrunde liegende Aufgabe, die Produktivität bei der Herstellung von wurstartigen Produkten mit schlauch- oder beutelartiger Verpackungshülle zu erhöhen.

Die Lösung dieser Aufgabe besteht erfindungsgemäß in einem Verfahren der eingangs genannten Art, bei dem die Teilvorgänge des Verschließens einschließlich des Einschnürens der Verpackungshülle, des Verlängerns des dabei entstandenen Zopfes sowie des Setzens und Schließens der Verschlußklammer zumindest teilweise unabhängig voneinander gesteuert werden.

Der Kern der Erfindung besteht darin, die starre Zwangskoordinierung der Bewegungsabläufe beim Schließen der Verpackungshülle zu Gunsten einer flexiblen, an das jeweilige Produkt angepaßten Steuerung oder Regelung der einzelnen Bewegungsabläufe aufzugeben. Dadurch besteht die Möglichkeit, den Spreizvorgang z.B. bei Rohwürsten oder Dichtstoff- und Kittwürsten langsamer und geregelt ablaufen zu lassen, das Setzen und Verschließen der Verschlußklammern aber erheblich schneller, als dies bisher üblich ist. Auf diese Weise wird die Produktivität bei der Herstellung solcher Produkte erheblich gesteigert.

Eine vorteilhafte Variante des Verfahrens zeichnet sich dadurch aus, daß die Teilvorgänge des Verschließens durch produktspezifische Programme gesteuert werden. Auf diese Weise können die Bewegungsabläufe der an dem Verschließvorgang beteiligten Maschinenteile für jedes Produkt in einem Programm hinterlegt werden, so daß diese Bewegungsabläufe zur Herstellung des jeweiligen Produktes leicht abgerufen werden können. Die produktspezifischen Eigenschaften, von denen die im Programm gespeicherten Bewegungsabläufe abhängen, sind beispielsweise die Art des Füllgutes und des Verpackungshüllenmaterials, der Enddurchmesser und das Endgewicht des fertigen Produktes und die Art der verwendeten Verschlußklammern.

Die Lösung der Aufgabe besteht erfindungsgemäß weiterhin in einer Vorrichtung der eingangs genannten Art, bei der die Mittel zum Einschnüren der Verpackungshülle, die Mittel zum Verlängern des Zopfes und die Mittel zum Setzen und Schließen von Verschlußklammern zumindest teilweise unabhängig voneinander steuerbar sind. Die Vorrichtung entspringt dem gleichen Kerngedanken wie das zuvor genannte Verfahren und kann entsprechend zur Durchführung dieses Verfahrens dienen. Die Vorrichtung schafft damit die Voraussetzungen für eine erhebliche Produktivitätssteigerung bei der Herstellung von wurstartigen Produkten. Die bei der Vorrichtung vorhandenen Mittel zum Einschnüren der Verpackungshülle und zur Bildung eines füllgutfreien Zopfabschnitts durch Spreizen der Einschnürmittel können die bekannten spreizbaren Verdrängerscherenpaare sein. Geeignete Mittel zum. Setzen und Schließen von Verschlußklammern sind die bekannten, mit Stempel und Matrize versehenen Cliphebel.

Die Vorrichtung weist vorzugsweise eine Steuereinheit auf, mit der die Mittel zum Einschnüren der Verpackungshülle, die Mittel zum Verlängern des dabei entstandenen Zopfes (durch Spreizen der Einschnürmittel) und die Mittel zum Setzen und Schließen der Verschlußklammern zu variabel koordinierter Betätigung verbunden sind.

Die Steuereinheit ist vorzugsweise programmierbar, so daß sie mit produktspezifischen Programmen gespeist werden kann, in welchen die für das jeweilige Produkt optimalen Bewegungsabläufe gespeichert sind. Auf diese Weise kann die Vorrichtung ohne Umbauten durch einfachen Programmwechsel leicht an das jeweils herzustellende Produkt angepaßt werden.

Bei einer bevorzugten Ausführungsform der Vorrichtung weisen die Mittel zum Einschnüren der Verpackungshülle, die Mittel zum Verlängern des Zopfes und die Mittel zum Setzen und Schließen von Verschlußklammern Elektromotoren als steuerbare Antriebselemente auf. Besonders geeignete Elektromotoren sind dabei Linearmotoren oder Synchronmotoren. Durch die Verwendung von Elektromotoren als Antriebselemente kann die gesamte Steuerung des Verschließvorganges elektrisch bzw. elektronisch erfolgen.

Eine alternative Ausführungsform der Vorrichtung zeichnet sich dadurch aus, daß die Mittel zum Einschnüren der Verpackungshülle, die Mittel zum Verlängern des Zopfes und die Mittel zum Setzen und Schließen von Verschlußklammern Hydraulikelemente als steuerbare Antriebselemente aufweisen. Ein gemeinsamer Vorteil von Hydraulikelementen wie auch der vorgenannten Elektromotoren ist, daß deren Bewegung zu jedem Zeitpunkt exakt steuerbar ist, so daß nicht nur der Beginn der einzelnen Bewegungsabläufe, sondern auch der jeweilige Bewegungsablauf selbst exakt vorgebbar ist.

Die Erfindung soll nun an Hand dreier Beispiele mit Hilfe der Zeichnungsfiguren näher erläutert werden. Diese zeigen:
- Fig. 1: in schematischer Perspektivdarstellung eine erfindungsgemäße Verschließvorrichtung (einschließlich Steuereinheit);
- Fig. 2: ein für einen bestimmten Produkttyp optimiertes Bewegungsdiagramm für den Verdrängerantrieb, den Spreizantrieb, den oberen Cliphebel und den unteren Cliphebel einer Verschließmaschine;
- Fig. 3: das Bewegungsdiagramm aus Fig. 2 für einen anderen Produkttyp; und
- Fig. 4: das Bewegungsdiagramm für einen dritten Produkttyp.

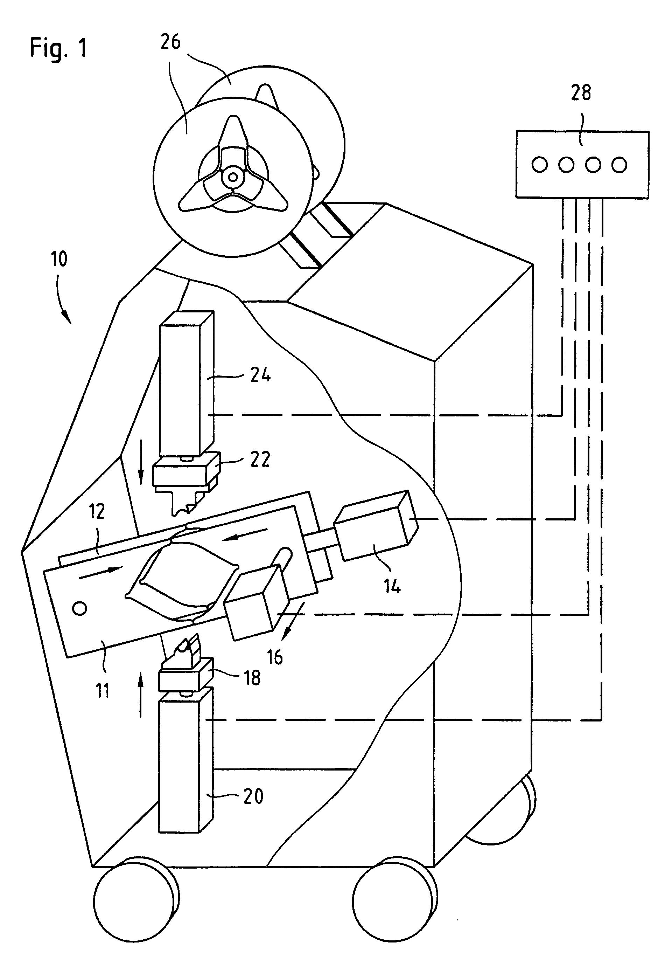

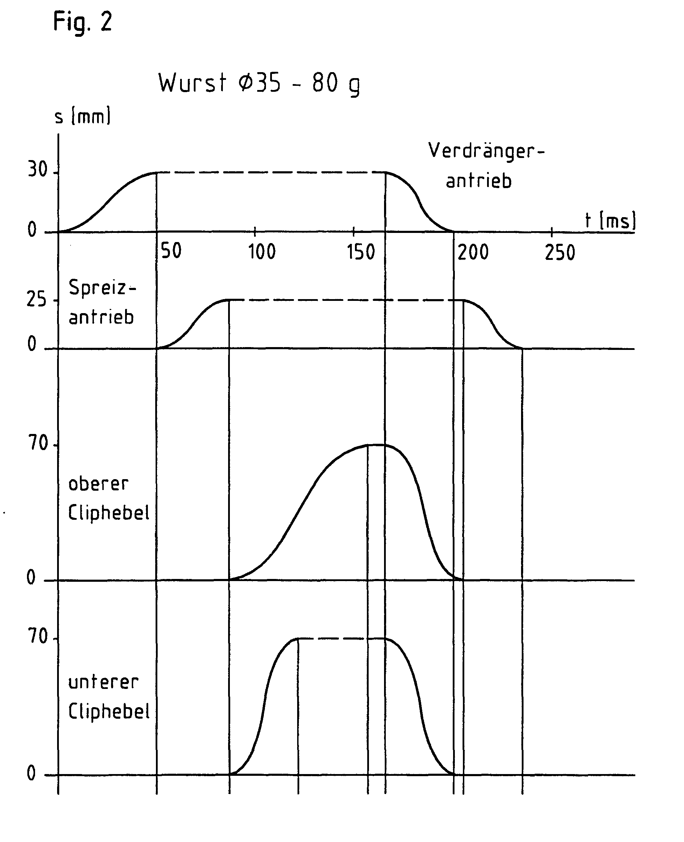

Die Diagramme in den Fig. 2 - 4 beziehen sich auf die Vorrichtung gemäß Fig. 1 zum Verschließen von gefüllten, schlauch- oder beutelartigen Verpackungshüllen. Diese im ganzen mit 10 bezeichnete Vorrichtung weist zwei Verdrängerscherenpaare 11, 12 auf, welche von einem Verdrängerantrieb in Form eines Einschnürzylinders 14 geschlossen und geöffnet werden können, um die gefüllte Verpakkungshülle zunächst zu einem Zopf zusammenzuraffen und später, nach dem Verlängern des Zopfes und Setzen des oder der Clips, wieder loslassen zu können. Außerdem können die Verdrängerscherenpaare mittels eines Spreizantriebs 16 vorübergehend in Wurstlängsrichtung axial voneinander weg bewegt werden, um auf diese Weise einen längeren füllgutfreien Zopfabschnitt gewünschter Länge herzustellen.

Weiterhin weist die Vorrichtung ein unteres Clipwerkzeug mit einer Matrize 18 zur Aufnahme einer oder mehrerer Verschlußklammern auf, welcher von einem unteren Verschließzylinder 20 unter den Darmzopf bewegt und nach dem Verschließen der Verschlußklammern wieder zurückbewegt werden kann. Ferner ist ein oberes Clipwerkzeug mit einem Stempel 22 vorgesehen, der von einem oberen Verschließzylinder 24 betätigt wird und mit der Matrize 18 des unteren Clipwerkzeugs zusammenwirkt, um die Verschlußklammern zu verschließen. Anschließend werden die Matrize 18 und der Stempel 22 wieder in ihre Ausgangslagen zurückbewegt. Die Verschlußklammern werden aneinanderhängend - in nicht dargestellter, aber bekannter Weise - von Magazinen in Form von Clipspulen 26 abgezogen und (unter Abtrennen) in die Matrize 18 eingeführt.

Die Verschließvorrichtung weist mithin vier Antriebselemente auf, die den eingangs beschriebenen Verschließvorgang bewirken: den Einschnürzylinder 14 zum Öffenen und Schließen der Verdrängerscherenpaare 11, 12, den Spreizantrieb 16 zum Spreizen der beiden Verdrängerscheerenpaare 11, 12 sowie den oberen und den unteren Verschließzylinder 24 bzw. 20. Diese Antriebe sind nicht durch einen gemeinsamen Steuerantrieb, etwa eine Kurvenscheibe, miteinander gekoppelt, sondern unterliegen der (elektrischen, pneumatischen oder hydraulischen) Steuerung durch eine Steuereinheit 28. Deren Wirkverbindung mit den Antrieben ist in Fig. 1 gestrichelt dargestellt.

Der Verschließvorgang wird durch einen Impuls ausgelöst, den die Füllmaschine an die Verschließmaschine spätestens dann abgibt, wenn die Verpackungshülle mit der gewünschten Füllgutmenge befüllt ist. Der Verschließvorgang beginnt damit, daß der Einschnürzylinder 14 der Verschließmaschine 10 die beiden Verdrängerscherenpaare 11, 12 nach einem vorprogrammierten Bewegungsablauf schließt, so daß die Verpackungshülle zu einem - zunächst kurzen - Zopf eingeschnürt wird.

Anschließend nimmt der Spreizantrieb 16 seine Arbeit auf und spreizt die beiden geschlossenen Verdrängerscherenpaare 11, 12, indem er sie in Wurstlängsrichtung axial voneinander weg bewegt. Hierdurch entsteht ein füllgutfreier Zopfabschnitt gewünschter Länge. Auch dieser Bewegungsablauf ist programmgesteuert und hängt beispielsweise von den Parametern Darmreibung, Prallheit des Produktes usw. ab.

Nach dem Herstellen des füllgutfreien Zopfabschnitts wird dieser mit zwei nebeneinander angeordneten Verschlußklammern verschlossen. Dazu drückt der untere Verschließzylinder 20 die Matrize 18, in der sich die Verschlußklammern befinden, unter den Darmzopf, während der obere Verschließzylinder 24 mit dem Stempel 22 sich gleichzeitig von oben gegen die Verschlußklammern bewegt und diese verschließt. Die oberen und unteren Verschließzylinder 20, 24 werden dabei so angesteuert, daß Stempel 22 und Matrize 18 gleichzeitig ihre Bewegung beginnen. Die Matrize 18 erreicht ihren maximalen Hub allerdings vor dem Stempel 22. Die Matrize 18 trägt die beiden Verschlußclips so weit in den Verschließbereich, daß sich der Zopf in den noch geöffneten Verschlußklammern befindet. Erst danach erreicht der Stempel 22 seine Endposition und schließt die beiden Verschlußklammern, indem er sie um den Zopf herum verformt. Stempel 22 und Matrize 18 verharren daraufhin eine vorgebbare Zeit in ihren Endlagen, um das Zurückfedern der geschlossenen Verschlußklammern zu minimieren. Die Schließbewegungen der beiden Werkzeuge und mithin das Programm, welches den Bewegungsablauf für den oberen und den unteren Verschließzylinder 20, 24 vorgibt, hängen beispielsweise von der gewünschten Laufruhe und der Verformbarkeit der verwendeten Verschlußklammern ab.

Nach dem Schließen der beiden Verschlußklammern können die beiden Verdrängerscherenpaare 11, 12 wieder geöffnet und die beiden Verschließwerkzeuge 18, 22 in ihre Ausgangslage zurückbewegt werden. Diese Bewegungsabläufe werden nicht durch irgendwelche Produktparameter eingeschränkt, so daß sie mit der maximal möglichen Geschwindigkeit durchgeführt werden können. Sobald die Verdrängerscherenpaare 11, 12 ganz geöffnet sind, können sie von dem Spreizantrieb 16 wieder aufeinanderzu bewegt werden, wobei ein gedämpfter Auslauf der Bewegung ein Aneinanderschlagen der beiden Verdrängerscherenpaare verhindert. Nachdem die beiden Verdrängerscherenpaare 11, 12 sowie die Verschließwerkzeuge 18, 22 wieder in ihre Ausgangsstellung zurückgekehrt sind, ist der Verschließvorgang beendet.

Die einzelnen Bewegungsabläufe werden einmal programmiert und können für die Produktion des gleichen Produkts über einen Programm-Code wieder aufgerufen werden.

Die Diagramme in den Fig. 2 - 4 zeigen die Stellwege s der an dem Verschließvorgang beteiligten vier Antriebselemente als Funktion der Zeit für drei verschiedene Produkte, die sich durch ihren Durchmesser und ihre Masse bzw. die Art des Füllguts voneinander unterscheiden. Auf diese Weise wird die Abhängigkeit der Bewegungsabläufe vom Durchmesser und der Masse des fertigen Produktes bzw. des Füllgutes deutlich.

In den Diagrammen der Fig. 2, 3 und 4 zeigt die Ordinate jeweils den Verstellweg s für den Einschnürzylinder 14, den Spreizantrieb 16, den Stempel 22 und die Matrize 18. Die Abzisse ist die Zeitachse.

Die Diagramme in Fig. 2 beziehen sich auf eine mit Brühwurstbrät gefüllte Wursthülle von 35 mm Durchmesser und einem Gewicht von 80 g.

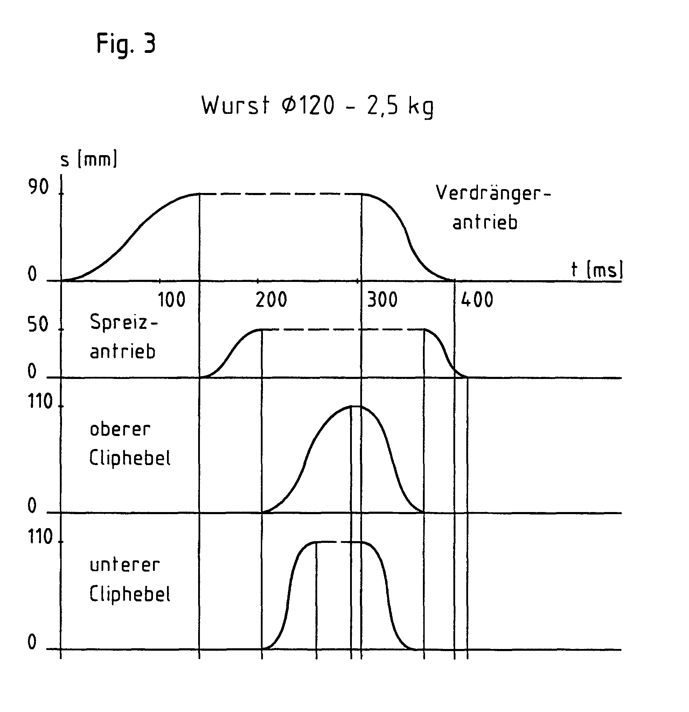

Auch die den Diagrammen in Fig. 3 zugrunde liegende Wurst ist mit Brühwurstbrät gefüllt, allerdings hat diese Wurst einen Durchmesser von 120 mm und wiegt schließlich 2,5 kg. Aus dem größeren Durchmesser und dem größeren Endgewicht des Produktes ergeben sich für alle vier Antriebe größere Verstellwege und - da die Beschleunigung der Antriebe begrenzt ist - auch längere Verstellzeiten.

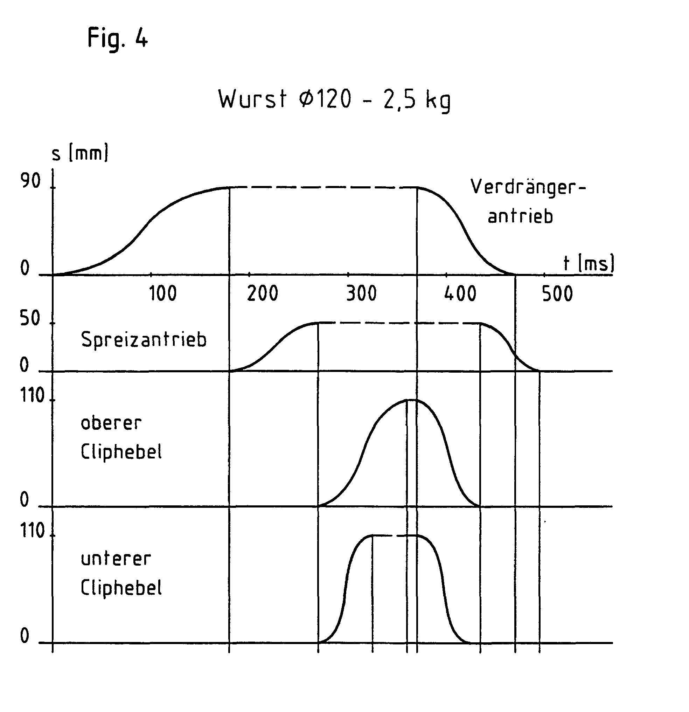

Die den Diagrammen in Fig. 4 zugrunde liegende Wurst hat den gleichen Durchmesser und das gleiche Endgewicht wie die Wurst in Fig. 3, allerdings ist sie nicht mit Brühwurstbrät, sondern mit Rohwurstbrät gefüllt. Da Rohwurstbrät gegenüber Brühwurstbrät eine andere Konsistenz hat, kann der Einschnürvorgang und der Spreizvorgang nicht so schnell durchgeführt werden wie bei Brühwurstbrät. Daher brauchen die Verdrängerscherenpaare 11, 12 beim Einschnüren trotz gleichen Verstellweges mehr Zeit, um von der geöffneten in die geschlossene Position gefahren zu werden. Gleiches gilt für das Spreizen der Verdrängerscherenpaare. Da für die Würste in Fig. 3 und 4 die gleichen Verschlußklammern verwendet werden, folgen der obere Stempel 22 und die untere Matrize 18 in beiden Fällen dem gleichen Geschwindigkeitsprofil. Von Beginn des Einschnürvorgangs an gemessen setzt die Bewegung des oberen und des unteren Werkzeugs in Fig. 4 gegenüber Fig. 3 zu einem späteren Zeitpunkt ein, da der obere und untere Verschließzylinder 24 bzw. 20 erst dann gestartet werden, wenn der Spreizantrieb 16 die beiden Verdrängerscherenpaare 11, 12 in die maximal gespreizte Position gefahren hat, wofür er länger braucht als in dem Beispiel der Fig. 3; außerdem wird auch der Spreizantrieb 16 erst in Gang gesetzt, wenn die beiden Verdrängerscherenpaare 11, 12 zum Ende des Einschnürvorgangs ganz geschlossen sind. Auch dies braucht in Fig. 4 länger als in Fig. 3

Wie der Vergleich der Bewegungsdiagramme, insbesondere derjenigen in Fig. 3 und 4 zeigt, ergibt sich durch die individuelle Ansteuerung der einzelnen Antriebe eine erhebliche Zeitersparnis gegenüber dem Fall, in dem all diese Antriebe beispielsweise über eine einzige Welle oder Kurvenscheibe miteinander gekoppelt sind. Würden nämlich die Antriebe in den den Fig. 3 und 4 zugrunde liegenden Beispielsfällen von einer Welle gemeinsam angetrieben, würden in Fig. 4 nicht nur der Einschnür- und der Spreizvorgang mehr Zeit als in Fig. 3 beanspruchen, sondern eben auch die dann von der gleichen Welle angetriebenen Verschließwerkzeuge, so daß das Setzen und Schließen der Verschlußklammern unnötig verzögert werden würde.

## Patentansprüche

1. Verfahren zum Herstellen von wurstartigen Produkten mit einer schlauch- oder beutelartigen Verpackungshülle, bei dem die (einseitig verschlossene) Verpackungshülle zunächst mit Füllgut befüllt und anschließend eingeschnürt wird, daraufhin ein füllgutfreier Zopfabschnitt gewünschter Länge hergestellt und der füllgutfreie Zopfabschnitt schließlich durch Setzen und Schließen mindestens einer Verschlußklammer verschlossen wird,
**dadurch gekennzeichnet,** daß die Teilvorgänge des Verschließens einschließlich des Einschnürens der Verpackungshülle, des Verlängerns des dabei entstandenen Zopfes sowie des Setzens und Schließens der Verschlußklammer zumindest teilweise unabhängig voneinander gesteuert werden.

2. Verfahren nach Anspruch 1, dadurch gekennzeichnet, daß die Teilvorgänge des Verschließens durch produktspezifische Programme gesteuert werden.

3. Verschließvorrichtung zum Herstellen von wurstartigen Produkten mit einer schlauch- oder beutelartigen Verpackungshülle, mit Mitteln (11, 12, 14) zum Einschnüren der Verpackungshülle, Mitteln (16) zur Bildung eines füllgutfreien Zopfabschnitts durch Spreizen der Einschnürmittel und Mitteln (18, 20, 22, 24) zum Setzen und Schließen von Verschlußklammern, dadurch gekennzeichnet, daß die Mittel (11, 12, 14) zum Einschnüren der Verpackungshülle, die Mittel (16) zum Spreizen der Einschnürmittel und die Mittel (18, 20, 22, 24) zum Setzen und Schließen von Verschlußklammern zumindest teilweise unabhängig voneinander steuerbar sind.

4. Vorrichtung nach Anspruch 3, dadurch gekennzeichnet, daß die Vorrichtung eine Steuereinheit (28) aufweist, an die die Mittel (11, 12, 14) zum Einschnüren der Verpackungshülle, die Mittel (16) zum Spreizen der Einschnürmittel und die Mittel (18, 20, 22, 24) zum Setzen und Schließen von Verschlußklammern angeschlossen sind.

5. Vorrichtung nach Anspruch 4, dadurch gekennzeichnet, daß die Steuereinheit programmierbar ist.

6. Vorrichtung nach einem der Ansprüche 3 bis 5, dadurch gekennzeichnet, daß die Mittel (11, 12, 14) zum Einschnüren der Verpackungshülle, die Mittel (16) zum Spreizen der Einschnürmittel und die Mittel (18, 20, 22, 24) zum Setzen und Schließen von Verschlußklammern Elektromotoren als Antriebselemente aufweisen.

7. Vorrichtung nach Anspruch 6, dadurch gekennzeichnet, daß die Elektromotoren Linearmotoren sind.

8. Vorrichtung nach Anspruch 6, dadurch gekennzeichnet, daß die Elektromotoren Synchronmotoren sind.

9. Vorrichtung nach einem der Ansprüche 3 bis 5, dadurch gekennzeichnet, daß die Mittel (11, 12, 14) zum Einschnüren der Verpackungshülle, die Mittel (16) zum Spreizen der Einschnürmittel und die Mittel (18, 20, 22, 24) zum Setzen und Schließen von Verschlußklammern Pneumatik- oder Hydraulikelemente als Antriebselemente aufweisen.

## Claims

1. A method for producing sausage-like products with a tubular or bag-shaped packaging casing, where the (unilaterally closed) packaging casing is first of all filled with filling and is subsequently crimped, then there is produced a neck portion of the desired length, which is free from filling, and the neck portion free from filling is finally closed by setting and closing at least one closure clip,
**characterized in** that the partial operations of closing including crimping the packaging casing, of elongating the neck obtained as well as of setting and closing the closure clip are at least partly controlled independent of each other.

2. The method as claimed in claim 1, characterized in that the partial operations of closing are controlled by product-specific programs.

3. A closing device for producing sausage-like products with a tubular or bag-shaped packaging casing, comprising means (11, 12, 14) for crimping the packaging casing, means (16) for forming a neck portion free from filling by spreading the crimping means, and means (18, 20, 22, 24) for setting and closing closure clips, characterized in that the means (11, 12, 14) for crimping the packaging casing, the means (16) for spreading the crimping means, and the means (18, 20, 22, 24) for setting and closing closure clips can at least partly be controlled independent of each other.

4. The device as claimed in claim 3, characterized in that the device includes a control unit (28) to which the means (11, 12, 14) for crimping the packaging casing, the means (16) for spreading the crimping means, and the means (18, 20, 22, 24) for setting and closing closure clips are connected.

5. The device as claimed in claim 4, characterized in that the control unit is programmable.

6. The device as claimed in any of claims 3 to 5, characterized in that the means (11, 12, 14) for crimping the packaging casing, the means (16) for spreading the crimping means, and the means (18, 20, 22, 24) for setting and closing closure clips have electric motors as driving elements.

7. The device as claimed in claim 6, characterized in that the electric motors are linear motors.

8. The device as claimed in claim 6, characterized in that the electric motors are synchronous motors.

9. The device as claimed in any of claims 3 to 5, characterized in that the means (11, 12, 14) for crimping the packaging casing, the means (16) for spreading the crimping means, and the means (18, 20, 22, 24) for setting and closing closure clips have pneumatic or hydraulic elements as driving elements.

## Revendications

1. Procédé de préparation de produits du type d'une saucisse ayant une enveloppe d'emballage sous forme de gaine ou de sachet, dans lequel l'enveloppe d'emballage (fermée d'un côté) est d'abord emplie de chair à saucisse et ensuite resserrée, puis on prépare un tronçon de tresse de longueur souhaitée exempt de chair à saucisse et on ferme le tronçon de tresse exempt de chair à saucisse, finalement, en mettant et en fermant au moins une agrafe de fermeture,
caractérisé en ce que les opérations partielles de la fermeture, y compris du resserrement de l'enveloppe d'emballage, de l'allongement de la tresse ainsi formée ainsi que de la mise et de la fermeture de l'agrafe de fermeture, sont commandées au moins en partie indépendamment les unes des autres.

2. Procédé suivant la revendication 1, caractérisé en ce que les opérations partielles de la fermeture sont commandées par des programmes spécifiques au produit.

3. Dispositif de fermeture pour la préparation de produits du type d'une saucisse comprenant une enveloppe d'emballage en forme de gaine ou de sachet, des moyens (11, 12, 14) de resserrement de la gaine d'emballage, des moyens (16) de formation d'un tronçon de tresse exempt de chair à saucisse par écartement des moyens de resserrement et des moyens (18, 20, 22, 24) pour mettre et fermer des agrafes de fermeture, caractérisé en ce que les moyens (11, 12, 14) de resserrement de l'enveloppe d'emballage, les moyens (16) d'écartement des moyens de resserrement et les moyens (18, 20, 22, 24) de mise et de fermeture des agrafes de fermeture peuvent être commandés au moins partiellement indépendamment les uns des autres.

4. Dispositif suivant la revendication 3, caractérisé en ce que les dispositifs comportent une unité (28) de commande à laquelle sont raccordés les moyens (11, 12, 14) de resserement de l'enveloppe d'emballage, les moyens (16) d'écartement des moyens de resserement et les moyens (18, 20, 22, 24) de mise et de fermeture d'agrafes d'emballage.

5. Dispositif suivant la revendication 4, caractérisé en ce que l'unité de commande peut être programmée.

6. Dispositif suivant l'une des revendications 3 à 5, caractérisé en ce que les moyens (11, 12, 14) destinés à resserrer l'enveloppe d'emballage, les moyens (16) destinés à écarter les moyens de resserrement et les moyens (18, 20, 22, 24) de mise et de fermeture d'agrafes de fermeture comportent des moteurs électriques comme élément d'entraînement.

7. Dispositif suivant la revendication 6, caractérisé en ce que les moteurs électriques sont des moteurs linéaires.

8. Dispositif suivant la revendication 6, caractérisé en ce que les moteurs électriques sont des moteurs synchrones.

9. Dispositif suivant l'une des revendications 3 à 5, caractérisé en ce que les moyens (11, 12, 14) destinés à resserrer l'enveloppe d'emballage, les moyens (16) destinés à écarter les moyens de resserrement et des moyens (18, 20, 22, 24) destinés à mettre et à fermer des agrafes de fermeture comportent des éléments pneumatiques ou des éléments hydrauliques comme élément d'entraînement.
